# FASCICULE DE BREVET EUROPEEN

(11) **EP 4 076 874 B1**
(45) Date de publication et mention de la délivrance du brevet: **03.07.2024**
(21) Numéro de dépôt: 20848708.2
(22) Date de dépôt: 17.12.2020
(51) Int. Cl.: B25J 21/02, G21F 7/047

(54) **ARRANGEMENT DE PORTE EQUIPANT UN PREMIER VOLUME CLOS PERMETTANT DE REDUIRE LES RISQUES DE CONTAMINATION LORS DU RACCORDEMENT D'UN DEUXIEME VOLUME CLOS AU PREMIER VOLUME CLOS**
AN EINEM ERSTEN GESCHLOSSENEN RAUM ANGEBRACHTE TÜRANORDNUNG ZUR REDUZIERUNG VON KONTAMINATIONSRISIKEN, WENN EIN ZWEITER GESCHLOSSENER RAUM MIT DEM ERSTEN GESCHLOSSENEN RAUM VERBUNDEN IST
DOOR ARRANGEMENT FITTED TO A FIRST ENCLOSED SPACE FOR REDUCING CONTAMINATION RISKS WHEN A SECOND ENCLOSED SPACE IS CONNECTED TO THE FIRST ENCLOSED SPACE

(30) Priorité: 20.12.2019 FR 1915247
(43) Date de publication de la demande: 26.10.2022
(73) Titulaire: ABC Transfer, 37000 Tours (FR)
(72) Inventeur: FELIX, Julien, 41100 Vendome (FR); SCHNEIDER, Jean-Luc, 41100 Saint Firmin des Prés (FR); GIRARD, Thierry, 75116 Paris (FR)
(74) Mandataire: IP Trust
(86) Numéro de dépôt international: PCT/FR2020/052498
(87) Numéro de publication internationale: WO 2021/123636

(56) Documents cités:
- EP-A1- 0 688 020
- WO-A1-2011/061463
- FR-A1- 2 833 745

## Description

### DOMAINE TECHNIQUE DE L'INVENTION

La présente invention concerne un arrangement de porte destiné à équiper un premier volume clos et apte à permettre un raccordement étanche d'un deuxième volume clos sur le premier volume clos.

La présente invention concerne plus particulièrement un arrangement de porte équiper un premier volume clos, comportant une bride arrangée pour délimiter une ouverture de passage dans le premier volume clos, une porte d'axe montée de manière articulée sur la bride de sorte à passer d'une position fermée dans laquelle la porte obture l'ouverture de passage, et une position ouverte, des moyens de solidarisation aptes à solidariser et maintenir la bride du deuxième volume clos plaquée contre la bride du premier volume.

Par volume, on entend dans la présente demande tout produit, équipement ou installation délimitant un volume. Ainsi, il peut s'agir d'une enceinte, d'un isolateur, d'un récipient, d'un conteneur, d'un sac, etc.

Par volume clos, on entend un volume isolé du milieu extérieur. Il peut s'agir notamment, mais non exclusivement, d'un volume de préparation, de stockage et/ou de manipulation de produits ne devant pas être en contact avec l'extérieur ou avec un utilisateur.

L'arrangement de porte est destiné notamment, mais non exclusivement, à raccorder deux volumes clos en vue de transférer des produits de l'un à l'autre sans rupture du confinement. Il peut s'agir par exemple du transfert de produits dangereux comme certains produits biologiques, chimiques ou radioactifs, du transfert de composants tels que bouchons, flacons, pistons, seringues, etc., du transfert de dispositifs de contrôle environnementaux tels que des plaques de milieu de culture, des compteurs particulaires, etc., du transfert de systèmes de nettoyage, du transfert de liquides, de poudres, d'outils, du transfert de déchets vers l'extérieur de l'enceinte et/ou du transfert de tout élément nécessaire à la production ou à la maintenance de la ligne de production.

### ETAT DE LA TECHNIQUE

Le transfert de produits d'un volume clos à un autre sans que le confinement de ces volumes ne soit rompu est une problématique délicate à résoudre. Pour répondre à celle-ci, des dispositifs de jonction étanches à double porte ont été développés. Citons par exemple ceux décrits dans les demandes de brevet FR2777822 et FR3036054.

Ces dispositifs de jonction double porte sont formés par un premier et un deuxième ensemble porte/bride, l'un des ensembles porte/bride étant celui d'une des volumes, l'autre ensemble porte/bride étant celui de l'autre volume. Classiquement, le volume clos à raccorder est un récipient de type conteneur ou poche transportable tandis que l'autre volume clos sur lequel est raccordé le récipient est généralement une enceinte de manipulation fixe. Le raccordement du récipient à l'enceinte de manipulation est effectué par raccordement des ensembles porte/bride entre eux. Ce raccordement est réalisé généralement par la mise en prise d'un système dit à baïonnettes - des oreilles mâles de la bride et de la porte du récipient venant s'engager respectivement dans des encoches de la bride et de la porte de enceinte de manipulation - suivi d'une rotation du récipient permettant le verrouillage de la bride du récipient sur la bride de l'enceinte de manipulation ainsi que le verrouillage de la porte du récipient sur la porte de l'enceinte, le déverrouillage des portes raccordées l'une à l'autre étant réalisé par déverrouillage des portes de leurs brides respectives.

Les frottements générés entre les brides et portes lors des mouvements de rotation effectués pour procéder au verrouillage des brides et portes entre elles, au déverrouillage des portes de leur bride associée ou au déverrouillage des volumes l'un de l'autre présentent l'inconvénient de produire des particules susceptibles d'induire une contamination au sein des volumes clos lais également de produire une rupture d'étanchéité du raccordement.

Le document EP 0 688 020 divulgue un arrangement de porte d'un premier volume clos permettant un raccordement étanche entre ledit premier volume clos et un deuxième volume clos, comportant une bride délimitant une ouverture de passage dans ledit premier volume clos, une porte montée sur ladite bride, et des moyens de solidarisation d'une bride dudit deuxième volume clos contre la bride dudit premier volume clos, lesdits moyens de solidarisation comportant des cames ou taquets de verrouillage coopérant avec des encoches ménagées sur le bord périphérique extérieur de la bride du deuxième volume et permettant de solidariser les brides sans mouvement de rotation des brides.

L'invention vise à proposer un arrangement de porte empêchant, ou du moins limitant, l'émission de particules susceptibles de générer une contamination des volumes clos lors le leur raccordement.

L'invention a également pour objet de proposer un arrangement de porte limitant les turbulences sous flux laminaire lors de l'ouverture de la porte, les turbulences étant une source de risques de contamination lors du process de transfert.

### OBJET DE L'INVENTION

A cet effet, l'invention propose un arrangement de porte d'un premier volume clos permettant un raccordement étanche entre ledit premier volume clos et un deuxième volume clos, comportant une bride arrangée pour délimiter une ouverture de passage dans le premier volume clos, l'ouverture de passage définissant un plan d'ouverture et un axe de passage perpendiculaire au plan d'ouverture, une porte montée de manière articulée sur la bride de sorte à passer d'une position fermée dans laquelle la porte obture l'ouverture de passage, à une position ouverte, des moyens de solidarisation aptes à solidariser et maintenir une bride du deuxième volume clos plaquée contre la bride du premier volume, les moyens de solidarisation comportant des taquets de verrouillage mobiles entre une position déverrouillée dans laquelle ils sont en retrait au sein de la bride et une position verrouillée dans laquelle ils saillissent radialement de la bride vers l'ouverture de passage, verrouillant ainsi la bride du deuxième volume clos sans mouvement de rotation de ladite bride par engagement de chaque taquet dans une encoche ménagée sur le bord périphérique extérieur de la bride du deuxième volume.

Cet arrangement des moyens de solidarisation permet ainsi de s'affranchir du mouvement de rotation imposé avec les dispositifs de jonction de l'art antérieur pour raccorder les brides entre elles limitant ainsi le frottement entre les deux volumes lors de leur raccordement entre eux et donc la production de particules génératrices de contamination.

Avantageusement, chaque taquet de verrouillage est entrainé par un micromoteur ménagé au niveau de la face extérieure de ladite bride.

Avantageusement, les micromoteurs sont associés à des moyens de détection de la présence de la bride du deuxième volume contre la bride du premier volume.

Avantageusement, la porte est fixée sur la bride par l'intermédiaire d'un mécanisme de liaison à double articulation comprenant une première articulation arrangée pour permettre un mouvement de rotation autour d'un axe perpendiculaire à l'axe de passage d'au plus de 30 degrés par rapport au plan de l'ouverture de passage et une deuxième articulation arrangée pour permettre un mouvement de rotation autour d'un axe parallèle à l'axe de passage.

Avantageusement, la deuxième articulation est arrangée pour permettre un mouvement de rotation et de préférence de 180 degrés par rapport au plan de l'ouverture de passage.

Avantageusement, le mécanisme de liaison à double articulation est couplé à un micromoteur situé dans le bras de raccordement.

### BREVE DESCRIPTION DES FIGURES

D'autres caractéristiques et avantages de l'invention ressortiront de la description détaillée de l'invention qui va suivre en référence aux figures annexées et dans lesquelles :
- La figure 1 représente une vue en perspective de l'arrière d'un arrangement de porte selon l'invention en position fermée ;
- La figure 2a représente une vue de face de la porte de l'arrangement de la figure 1, en position fermée ;
- La figure 2b représente une vue de dessus de la porte de l'arrangement de la figure 1, en position fermée ;
- La figure 3a représente une vue de face de la porte de l'arrangement de la figure 1, en position intermédiaire d'ouverture ;
- La figure 3b représente une vue de dessus de la porte de l'arrangement de la figure 1, en position intermédiaire d'ouverture ;
- La figure 4a représente une vue de face de la porte de l'arrangement de la figure 1, en position intermédiaire d'ouverture ;
- La figure 4b représente une vue de dessus de la porte de l'arrangement de la figure 1, en position intermédiaire d'ouverture ;
- La figure 5a représente une vue de face de la porte de l'arrangement de la figure 1, en position d'ouverture complète ;
- La figure 5b représente une vue de dessus de la porte de l'arrangement de la figure 1, en position d'ouverture complète ;
- La figure 6 représente une vue en perspective de face de la porte de l'arrangement de la figure 1, en position fermée ;
- La figure 7a représente une vue de détail d'un taquet de verrouillage de bride dans un état de non verrouillé de la bride ;
- La figure 7b représente le taquet de verrouillage de bride de la figure 7a dans un état de verrouillage de la bride.
- La figure 8 représente une vue en perspective de face de la porte de l'arrangement de la figure 1, en position fermée, la porte étant en position de solidarisation avec la porte du deuxième volume clos.

Dans ce qui suit, on désigne par « vue arrière » ou « vue de l'arrière », la vue qui est dans ou dirigé vers l'espace intérieur du volume clos délimité par l'arrangement de porte. Par analogie, on désigne par « vue de face » d'un volume clos, ce qui est situé hors de l'espace intérieur du volume clos ou dirigé à l'opposé de l'intérieur du volume clos délimité par l'arrangement de porte.

### DESCRIPTION DETAILLEE DE L'INVENTION

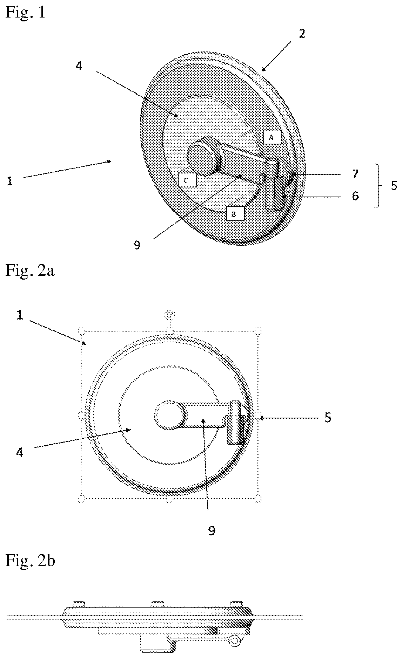

En relation avec les figures 1 à 8, il est décrit un arrangement de porte 1 équipant un premier volume clos. Cet arrangement de porte est aménagé pour permettre le raccordement d'un deuxième volume clos. Avantageusement, le premier volume clos est une enceinte fixe tandis que le deuxième volume clos est un conteneur transportable. Il s'agit bien entendu d'un exemple de réalisation, le dispositif selon l'invention n'étant pas limité à ce type de volumes clos. L'arrangement de porte du premier volume et l'arrangement de porte du deuxième volume forment, lorsque qu'ils sont raccordés l'un à l'autre, un dispositif de fonction étanche permettant le transfert de produits entre les deux volume clos, sans rupture du confinement.

L'arrangement de porte 1 selon l'invention comporte une bride 2 et une porte 4. La bride 2 est arrangée pour délimiter une ouverture de passage 3 dans l'enceinte pourvue de l'arrangement de porte 1, l'ouverture de passage 3 définissant un plan d'ouverture et un axe de passage perpendiculaire au plan d'ouverture. La porte 4 est fixée de manière articulée sur la bride 2 de sorte à passer d'une position fermée dans laquelle la porte 4 obture l'ouverture de passage 3 à une position ouverte dans laquelle la porte 4 s'étend sensiblement parallèlement au plan d'ouverture de passage, et inversement. Pour ce faire, la porte est fixée sur la bride par l'intermédiaire d'un mécanisme de liaison 5 à double articulation. Ce dernier comporte ainsi une première articulation 6 arrangée pour permettre un mouvement de rotation autour d'un axe A perpendiculaire à l'axe C de la porte (ou à l'axe de l'ouverture de passage) d'une part et une deuxième articulation 7 arrangée pour permettre un mouvement de rotation autour d'un axe B parallèle à l'axe C de la porte (ou à l'axe de passage de l'ouverture de passage) d'autre part (figure 1). Dans la présente description, on désigne par « axe de la porte » l'axe qui s'étend perpendiculairement à la porte lorsque celle-ci est en position fermée. L'axe de la porte correspond donc à l'axe de passage de l'ouverture de passage 3. L'axe C représenté sur la figure 1 désignera par la suite indifféremment l'axe de la porte en position fermée et l'axe de passage.

Les deux articulations 6 et 7 sont arrangées avec la porte 4 pour que l'ouverture de la porte s'effectue en premier lieu suivant le mouvement de rotation autour de l'axe A puis en deuxième lieu suivant le mouvement de rotation autour de l'axe B. La première articulation 6 se présente sous la forme d'une charnière dont la partie fixe est solidaire de la deuxième articulation 7 qui est quant à elle couplée à la porte par un bras de raccordement 9.

La première articulation 6 est arrangée pour permettre un mouvement de rotation d'au plus de 30 degrés par rapport au plan de l'ouverture tandis que la deuxième articulation 7 est arrangée pour permettre un mouvement de rotation compris d'au moins 45 degrés, et de préférence de 180 degrés par rapport au plan de l'ouverture.

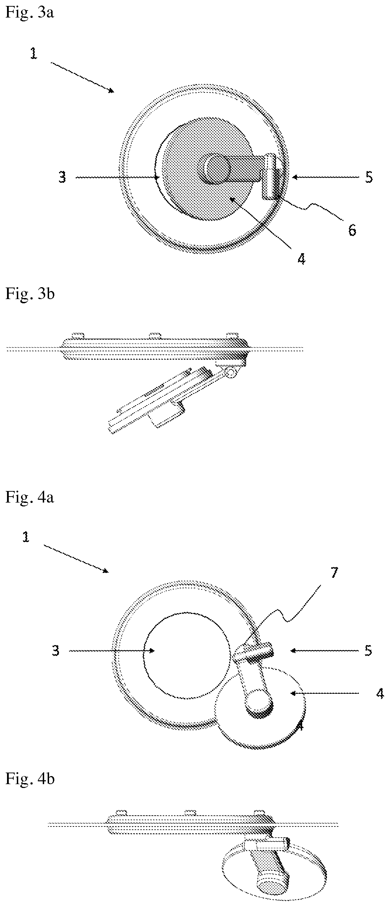

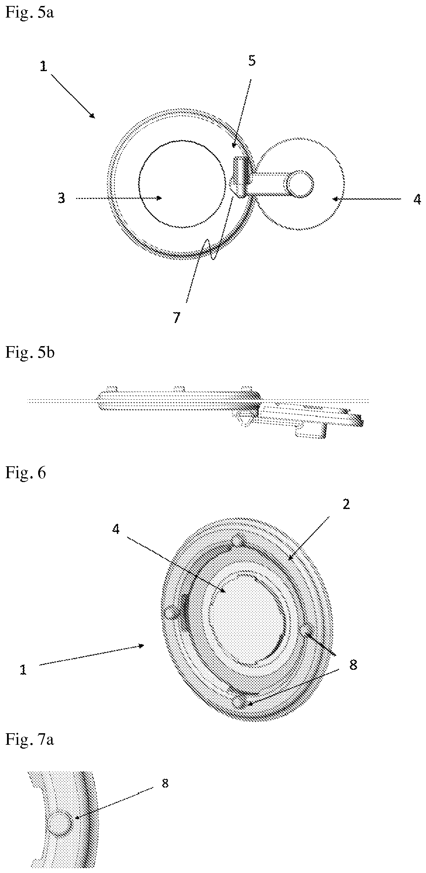

Les figures 2 à 5 illustrent les mouvements de rotation de la porte effectués pour passer d'une position fermée à une position ouverte. Ainsi, l'ouverture de la porte 4 s'effectue, depuis sa position fermée (figure 2), par rotation autour de l'axe A de la charnière (première articulation 5) suivant une course de 20 degrés environ dans l'exemple illustré (figure 3). La porte 4 est alors dans une position d'ouverture partielle. La porte 4 est ensuite actionnée pour se mouvoir en rotation autour de l'axe B de la deuxième articulation 7 sur une course de 180 degrés environ pour parvenir à la position d'ouverture finale illustrée sur la figure 5 en passant par des positions d'ouverture intermédiaires offrant un dégagement complet de l'ouverture de passage 3 (la figure 4 montre la porte dans une position d'ouverture intermédiaire). Dans sa position finale, la porte s'étend dans un plan parallèle au plan de l'ouverture de passage, diamétralement opposée à sa position fermée.

Selon un mode de réalisation avantageux, la porte est avantageusement motorisée. Pour faire, les première et deuxième articulations 6, 7 sont couplées chacune à un moteur du type par exemple pas à pas. Il est bien entendu évident que l'invention ne se limite pas à une porte motorisée, le mouvement de cette dernière pouvant être réalisée manuellement par actionnement d'un levier de commande porté par la porte, ce levier de commande pouvant être prévu côté intérieur et/ou côté extérieur du volume clos.

Comme indiqué précédemment, l'arrangement de porte selon l'invention permet le couplage d'un deuxième volume pourvu d'une deuxième bride délimitant une ouverture de passage dans le deuxième volume clos et obturée par une deuxième porte. A cet effet, la bride 2 présente avantageusement une face extérieure 20 pourvue de moyens de solidarisation aptes à solidariser et maintenir la bride de la porte du deuxième volume clos plaquée contre elle. Dans le mode de réalisation illustré, les moyens de solidarisation de la bride comportent des taquets de verrouillage 8 magnétique. Il est bien entendu évident qu'il s'agit d'un exemple de réalisation et que d'autres moyens de verrouillage peuvent être mis en oeuvre, comme par exemple des actionneurs, sans sortir du cadre de l'invention.

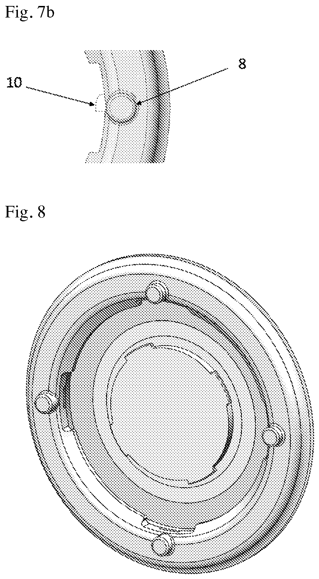

Chaque taquet de verrouillage 8 est pourvu d'un ergot de verrouillage 10 mobile entre une position dans laquelle l'ergot est en retrait au sein de la bride et une position dans laquelle l'ergot saillit radialement de la bride 2 vers l'ouverture de passage, verrouillant ainsi la bride du deuxième volume clos. Par ailleurs, chaque taquet de verrouillage 8 est associé à un micromoteur apte à les entrainer en rotation pour les faire passer de leur état non verrouillé à leur état verrouillé. Les figures 7a et 7b montrent un taquet dans sa position de déverrouillage et sa position de verrouillage.

Dans le mode de réalisation illustré, la bride est pourvue de quatre taquets de verrouillage 8 répartis à 90 degrés. Il s'agit bien entendu d'un exemple de réalisation, le nombre de taquets de verrouillage pouvant varier selon les dimensions de la porte. La bride comporte ainsi a minima deux taquets de verrouillage, situés avantageusement diamétralement opposés l'un de l'autre.

Suivant la figure 8, la porte 4 effectue une rotation autour de l'axe C (avantageusement de 60°) pour déverrouiller la porte du deuxième volume clos de la bride de celui-ci et de solidariser la porte du deuxième volume clos avec la porte 4. Dans le mode de réalisation illustré, la porte est entrainée par un moteur situé dans le bras de raccordement 9.

L'invention est décrite dans ce qui précède à titre d'exemple. Il est entendu que l'homme du métier est à même de réaliser différentes variantes de réalisation de l'invention sans pour autant sortir du cadre de l'invention tel que défini dans les revendications.

## Revendications

1. Arrangement de porte (1) d'un premier volume clos permettant un raccordement étanche entre ledit premier volume clos et un deuxième volume clos, comportant
- une bride (2) arrangée pour délimiter une ouverture de passage dans le premier volume clos, l'ouverture de passage définissant un plan d'ouverture et un axe de passage perpendiculaire au plan d'ouverture,
- une porte (4) montée de manière articulée sur la bride (2) de sorte à passer d'une position fermée dans laquelle la porte (4) obture l'ouverture de passage (3), à une position ouverte,
- des moyens de solidarisation aptes à solidariser et maintenir une bride du deuxième volume clos plaquée contre la bride du premier volume,
et comportant des taquets de verrouillage (8) mobiles entre une position déverrouillée dans laquelle ils sont en retrait au sein de la bride (2) et une position verrouillée dans laquelle ils saillissent radialement de la bride (2) vers l'ouverture de passage, verrouillant ainsi la bride du deuxième volume clos sans mouvement de rotation de ladite bride (2) par engagement de chaque taquet dans une encoche ménagée sur le bord périphérique extérieur de la bride du deuxième volume.

2. Arrangement de porte (1) selon la revendication 1, **caractérisé en ce que** chaque taquet de verrouillage (8) est entrainé par un micromoteur ménagé au niveau de la face extérieure de ladite bride (2).

3. Arrangement de porte (1) selon la revendication 2, **caractérisé en ce que** les micromoteurs sont associés à des moyens de détection de la présence de la bride du deuxième volume contre la bride (2) du premier volume.

4. Arrangement de porte (1) selon l'un quelconque des revendications précédentes, **caractérisé en ce que** la porte (4) est fixée sur la bride (2) par l'intermédiaire d'un mécanisme de liaison à double articulation (5) comprenant une première articulation (6) arrangée pour permettre un mouvement de rotation autour d'un axe (A) perpendiculaire à l'axe de passage d'au plus de 30 degrés par rapport au plan de l'ouverture de passage (3) et une deuxième articulation (7) arrangée pour permettre un mouvement de rotation autour d'un axe (B) parallèle à l'axe de passage.

5. Arrangement de porte (1) selon la revendication 4, **caractérisé en ce que** la deuxième articulation (7) est arrangée pour permettre un mouvement de rotation et de préférence de 180 degrés par rapport au plan de l'ouverture de passage (3).

6. Arrangement de porte (1) selon la revendication 4 ou la revendication 5, **caractérisé en ce que** le mécanisme de liaison à double articulation (5) est couplé à un micromoteur situé dans le bras de raccordement (9).

## Patentansprüche

1. Türanordnung (1) eines ersten geschlossenen Volumens, die eine abdichtende Verbindung zwischen dem ersten geschlossenen Volumen und einem zweiten geschlossenen Volumen ermöglicht, die aufweist:
- einen Flansch (2), der zum Begrenzen einer Durchlassöffnung in dem ersten geschlossenen Volumen angeordnet ist, wobei die Durchlassöffnung eine Öffnungsebene und eine Durchlassachse senkrecht zu der Öffnungsebene definiert,
- eine Tür (4), die an dem Flansch (2) gelenkig montiert ist, um von einer Schließposition, in der die Tür (4) die Durchlassöffnung (3) verschließt, in eine offene Position zu wechseln,
- Befestigungsmittel, die geeignet sind, einen Flansch des zweiten geschlossenen Volumens an den Flansch des ersten Volumens gedrückt zu befestigen und zu halten, und die Verriegelungsnasen (8) aufweisen, die zwischen einer entriegelten Position, in der sie innerhalb des Flansches (2) versenkt sind, und einer verriegelten Position bewegbar sind, in der sie radial von dem Flansch (2) in Richtung der Durchlassöffnung vorstehen, wobei so der Flansch des zweiten geschlossenen Volumens ohne Drehbewegung des Flansches (2) durch Eingreifen jeder Nase in eine Kerbe verriegelt wird, die an dem äußeren Umfangsrand des Flansches des zweiten Volumens vorgesehen ist.

2. Türanordnung (1) nach Anspruch 1, **dadurch gekennzeichnet, dass** jede Verriegelungsnase (8) durch einen Mikromotor angetrieben wird, der an der Außenseite des Flansches (2) vorgesehen ist.

3. Türanordnung (1) nach Anspruch 2, **dadurch gekennzeichnet, dass** den Mikromotoren Mittel zum Erkennen des Vorhandenseins des Flansches des zweiten Volumens an dem Flansch (2) des ersten Volumens zugeordnet sind.

4. Türanordnung (1) nach einem der vorstehenden Ansprüche, **dadurch gekennzeichnet, dass** die Tür (4) an dem Flansch (2) über einen Doppelgelenkverbindungsmechanismus (5) fixiert ist, umfassend ein erstes Gelenk (6), das zum Ermöglichen einer Drehbewegung um eine Achse (A) senkrecht zu der Durchlassachse um höchstens 30 Grad relativ zu der Ebene der Durchlassöffnung (3) angeordnet ist, und ein zweites Gelenk (7), das zum Ermöglichen einer Drehbewegung um eine Achse (B) parallel zu der Durchlassachse angeordnet ist.

5. Türanordnung (1) nach Anspruch 4, **dadurch gekennzeichnet, dass** das zweite Gelenk (7) zum Ermöglichen einer Drehbewegung und vorzugsweise von 180 Grad relativ zu der Ebene der Durchlassöffnung (3) angeordnet ist.

6. Türanordnung (1) nach Anspruch 4 oder 5,
**dadurch gekennzeichnet, dass** der Doppelgelenkverbindungsmechanismus (5) mit einem Mikromotor gekoppelt ist, der sich in dem Verbindungsarm (9) befindet.

## Claims

1. Door arrangement (1) of a first enclosed space allowing a sealed connection between said first enclosed space and a second enclosed space, comprising
- a flange (2) arranged to define a passage opening in the first enclosed space, the passage opening defining an opening plane and a passage axis perpendicular to the opening plane,
- a door (4) hingedly mounted on the flange (2) so as to move from a closed position, in which the door (4) closes the passage opening (3), to an open position,
- securing means for securing and holding a flange of the second enclosed space against the flange of the first space, and comprising locking catches (8) movable between an unlocked position in which they are recessed within the flange (2) and a locked position in which they project radially from the flange (2) toward the passage opening, thus locking the flange of the second enclosed space without rotational movement of said flange (2) by engaging each catch in a notch provided on the outer peripheral edge of the flange of the second space.

2. Door arrangement (1) according to claim 1, **characterized in that** each locking catch (8) is driven by a micromotor formed at the outer face of said flange (2).

3. Door arrangement (1) according to claim 2, **characterized in that** the micromotors are associated with means for detecting the presence of the flange of the second space against the flange (2) of the first space.

4. Door arrangement (1) according to any of the preceding claims, **characterized in that** the door (4) is fixed to the flange (2) by means of a double-jointed link mechanism (5) comprising a first joint (6) arranged to allow a rotational movement about an axis (A) perpendicular to the passage axis of at most 30 degrees relative to the plane of the passage opening (3) and a second joint (7) arranged to allow a rotational movement about an axis (B) parallel to the passage axis.

5. Door arrangement (1) according to claim 4, **characterized in that** the second joint (7) is arranged to allow a rotational movement, preferably of 180 degrees, relative to the plane of the passage opening (3).

6. Door arrangement (1) according to either claim 4 or claim 5, **characterized in that** the double-jointed link mechanism (5) is coupled to a micromotor located in the connection arm (9).
